(19)

Europäisches
Patentamt
European
Patent Office
Office européen
des brevets

(11) **EP 2 639 915 A2**

(12) **EUROPEAN PATENT APPLICATION**

(43) Date of publication:
   **18.09.2013 Bulletin 2013/38**

(51) Int Cl.:
   *H02H 9/04* (2006.01)     *H05B 33/08* (2006.01)
   *H02H 3/20* (2006.01)

(21) Application number: **12161743.5**

(22) Date of filing: **28.03.2012**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**

(30) Priority: **19.12.2011 TW 100147046**

(71) Applicant: **Lextar Electronics Corp.
   300 Hsinchu (TW)**

(72) Inventor: **Lai, Chien-Feng
   303 Hukou Township, Hsinchu County (TW)**

(74) Representative: **Viering, Jentschura & Partner
   Kennedydamm 55 / Roßstrasse
   40476 Düsseldorf (DE)**

(54)   **Over voltage protection circuit and driver circuit using the same**

(57)   An over voltage protection circuit (20), adapted for placing between a power pin (VCC) of a chip (30) and a power terminal (PT) is provided. The over voltage protection circuit (20) includes a voltage detection unit (201), a current limiting component (203), and a switch component (205). The voltage detection unit (201) is coupled between the power terminal (PT) and a ground (GND), for outputting a setting voltage (Vc) according to the voltage level at the power terminal (PT). The current limiting component (203) is coupled between the power terminal (PT) and the power pin (VCC) of the chip (30). The switch component (205) is coupled between the power pin (VCC) of the chip (30) and the ground (GND), wherein the switch component (205) is further coupled to the voltage detection unit (201) and controlled by the setting voltage (Vc). When the voltage level at the power terminal (PT) is higher than a first predetermined value, the switch component (205) conducts to cut off voltage received by the chip (30).

FIG. 1

EP 2 639 915 A2

**Description**

BACKGROUND

1. Technical Field

The present disclosure relates to a protection circuit, in particular, to an over voltage protection circuit and the driver circuit using the same.

2. Description of Related Art

As technology advanced, the light emitting diode (LED) has been widely used in lighting, indicator, display, and backlight applications. The LED generally requires a driver circuit for controlling the operation thereof (i.e., on/off operations, brightness control, and conducting duration).

It is known that driver circuit in practice is integrated in an IC chip, which serves as the driver chip. The driver chip is coupled to the LED circuit to control the operation thereof. For instance, the power pin of the driver chip may couple to the output terminal of a power supply circuit to receive the supplying power. The driving pin may be coupled to the LED circuit so as to have the driver chip control the operation of the LED circuit. Moreover, the supplying power level of the driver chip and the number of the light emitting diodes to be driven by the driver chip are generally predetermined so as to prevent excess power consumed in the driver chip causing over heating issues. Henceforth, when the supplying power level suddenly increases, may lead to excessive power consumed in the drive chip, and eventually results in the driver chip overheating, causing safety problems.

Currently, most of the driver chips have over temperature protection (OTP) capability. For instance, the drive chip would activate over protection function (e.g., disable the driver chip to stop receiving the supplying power) when the internal temperature of the driver chip excess a predetermined temperature (e.g., 100°C). However, this kind of protection is a passive protection, since the protection mechanism would not be triggered until the internal temperature rises to a certain value. Hence this may not effectively prevent overheating and excessive power consumed issues caused by over voltage therefore the operation of the driver chip may still be affected. In addition, for driver chips without over protection temperature capability are unable to use the described over protection temperature function to perform the corresponding protections.

SUMMARY

An exemplary embodiment of the present disclosure provides an over voltage protection circuit, the over voltage protection circuit can utilize voltage determining method and actively conducts a switch component to cut off the voltage being received by a chip when the voltage level of the supplying power is higher than a first predetermined value so as to prevent chip overheating while reduce the power consumption of the protection circuit.

An exemplary embodiment of the present disclosure provides an over voltage protection circuit, adapted for placing between a power pin of a chip and a power terminal. The over voltage protection circuit includes a voltage detection unit, a current limiting component, and a switch component. The voltage detection unit is coupled between the power terminal and a ground. The voltage detection unit is for outputting a setting voltage according to the voltage level at the power terminal. The current limiting component is coupled between the power terminal and the power pin of the chip. The switch component is coupled between the power pin of the chip and the ground, wherein the switch component is further coupled to the voltage detection unit and operates according to the setting voltage. When the voltage level at the power terminal is higher than a first predetermined value, the switch component conducts to cut off voltage being received by the chip.

According to one exemplary embodiment of the present disclosure, the switch component is an NMOS transistor, wherein the drain of the NMOS transistor is coupled to the power pin, the source of the NMOS transistor is coupled to the ground, and the gate of the NMOS transistor is coupled to the voltage detection unit for receiving the setting voltage.

According to one exemplary embodiment of the present disclosure, the switch component is an NPN transistor, wherein the collector of the NPN transistor is coupled to the power pin, the emitter of the NPN transistor is coupled to the ground, and the base of the NPN transistor is coupled to the voltage detection unit for receiving the setting voltage.

An exemplary embodiment of the present disclosure provides a driver circuit, adapted for driving a light emitting unit having at least a light emitting diode, wherein a first end of the light emitting unit is coupled to a power terminal. The driver circuit includes a chip and an over voltage protection circuit. The chip is coupled to a second end of the light emitting unit and is for driving the light emitting unit. The over voltage protection circuit is coupled between the power terminal and a power pin of the chip. The over voltage protection circuit includes a voltage detection unit, a current limiting component, and a switch component. The voltage detection unit is coupled between the power terminal and a ground, wherein the voltage detection circuit outputs a setting voltage according to the voltage level at the power terminal. The current limiting component is coupled between the power terminal and the power pin of the chip. The switch component is coupled between the power pin of the chip and the ground, wherein the switch component is further coupled to the voltage detection unit and operates according to the setting voltage. When the voltage level at the power terminal is higher than a first predetermined value, the switch component conducts to cut off the voltage being received by the chip.

To sum up, the present disclosure illustrates an over voltage protection circuit, the over voltage protection circuit can utilize voltage determining method and actively conducts switch component to cut off the voltage being received by a chip when the voltage level of the supplying power is higher than a first predetermined value so as to achieve chip protection objective. Therefore, the over voltage protection circuit may actively protects the driver chip prior to the activation of the over temperature protection function. The disclosed over voltage protection can be applied to all types of chips regardless whether the chip has the over temperature protection capability or not, thereby achieve the over voltage/over temperature protection objective. In addition, the design of the detection architecture associated with the over voltage protection circuit may further reduce power consumption so as to increase the effectiveness of the protection circuit.

In order to further understand the techniques, means and effects of the present disclosure, the following detailed descriptions and appended drawings are hereby referred, such that, through which, the purposes, features and aspects of the present disclosure can be thoroughly and concretely appreciated; however, the appended drawings are merely provided for reference and illustration, without any intention to be used for limiting the present disclosure.

BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.

FIG. 1 is a circuit diagram of a driver circuit in accordance to the first exemplary embodiment of the present disclosure.

FIG. 2 is an exemplary waveform illustrating a circuit operation associated with the driver circuit in accordance to the first exemplary embodiment of the present disclosure.

FIG. 3 is an exemplary waveform illustrating a circuit operation associated with the driver circuit in accordance to the first exemplary embodiment of the present disclosure.

FIG. 4 is a circuit diagram of a driver circuit in accordance to the second exemplary embodiment of the present disclosure.

FIG. 5 is a circuit diagram of a driver circuit in accordance to the third exemplary embodiment of the present disclosure.

DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts.

[First exemplary embodiment]

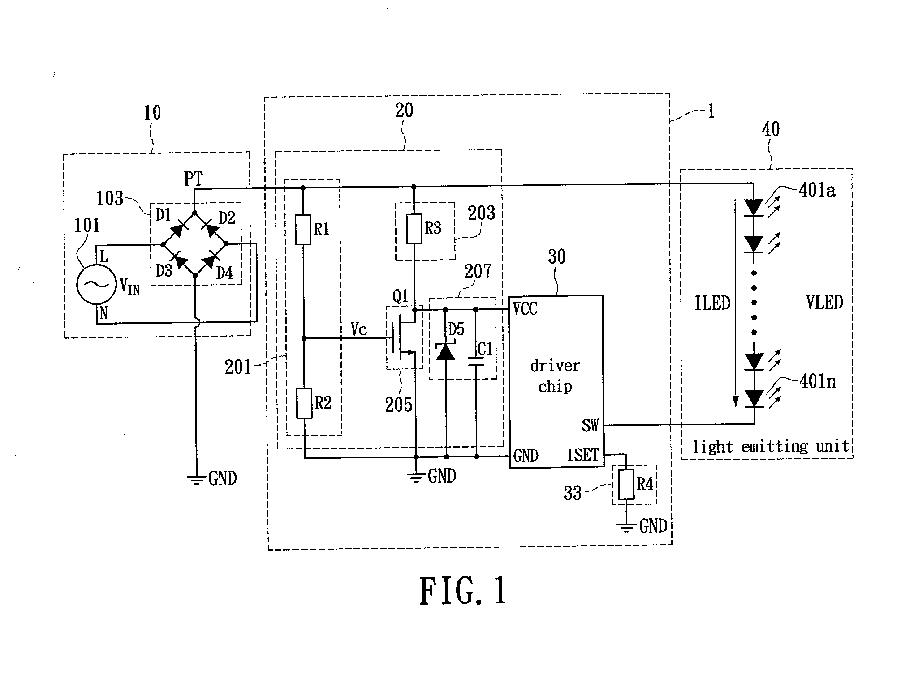

Please refer to FIG. 1, which illustrates a circuit diagram of a driver circuit in accordance to the first exemplary embodiment of the present disclosure. The driver circuit 1 is coupled to a power terminal PT of a power supply circuit 10 and a light emitting unit 40, wherein the driver circuit 1 is for adjusting the current ILED flow through the light emitting unit 40 so as to configure the brightness associated with the light emitting unit 40. The light emitting unit 40 includes at least a solid-state lighting component, for instance the light emitting diodes (LED) 401a~401n, however, the type of the solid-state lighting component is not limited to the examples provided by the instant embodiment. The instant embodiment employs a plurality of LED 401a~401n as examples, wherein the anode of the LED 401 a is coupled to the power terminal PT and the cathode of the LED 401n is coupled to a driving pin SW of a driver chip 30.

The power supply circuit 10 is for rectifying AC voltage $V_{IN}$ and powering the driver circuit 1 and the light emitting unit 40 through the power terminal PT. The power supply circuit 10 includes an AC voltage source 101 and a rectifier circuit 103. The rectifier circuit 103 may for example be a bridge rectifier and includes diodes D1~D4, but the instant embodiment does not limit the structure of the rectifier circuit 103.

The rectifier circuit 103 of the instant embodiment uses the bridge rectifier as an example, wherein the anode of the diode D1 is couple to the cathode of the diode D3 and the cathode of the diode D1 is coupled to the cathode of the diode D2; the anode of the diode D2 is coupled to the cathode of the diode D4 and the anode of the diode D4 is coupled to the anode of the diode D3. A terminal L of the AC voltage source 101 is coupled to the junction of the diode D 1 and the diode D3 while a terminal N of the AC voltage source 101 is coupled to the junction of the diode D2 and the diode D4. Thus the AC voltage source 101 rectifies the AC voltage $V_{IN}$ by alternating the operation of diodes D1, D3 and diodes D2, D4. The junction of the diode D 1 and the diode D2 is coupled to the power terminal PT while the junction of the diode D3 and the diode D4 is coupled to a ground GND. Consequently, the bridge rectifier circuit formed by diodes D1~D4 may rectify the AC voltage $V_{IN}$ generated by the AC voltage source 101 and power the driver circuit 1 and the light emitting unit 40 through the power terminal PT.

The driver circuit 1 includes an over voltage protection circuit 20 and the driver chip 30, wherein the over voltage protection circuit 20 is coupled to the driver chip 30 so as to avoid damages to the driver chip 30 from suddenly high voltage drop (e.g., voltage spike). The light emitting unit 40 is coupled between the power terminal PT and the driving pin SW of the driver chip 30, wherein the driver chip 30 can configure the current flowing through the light emitting unit 40. It is worth to note that the number of the driving pin SW associated with the driver chip 30 may be one or more and is configured in accordance to a specific design, hence shall not be limited by the instant embodiment. The drive chip 30 may be an off line linear LED driver IC.

The over voltage protection circuit 20 includes a voltage detection unit 201, a current limiting component 203, a switch component 205, and a voltage regulator circuit 207. The voltage detection unit 201 is coupled between the power terminal PT and the ground GND, wherein the voltage detection unit 201 can output a setting voltage Vc according to the voltage level at the power terminal PT. The current limiting component 203 is coupled between the power terminal PT and the power pin VCC of the driver chip 30, wherein the current limiting component 203 is further coupled between the power terminal PT and the switch component 205. The current limiting component 203 may be a high impedance component for limiting the current flow through the switch component 205 so as to avoid high current damages. The switch component 205 is coupled between the power pin VCC of the driver chip 30 and the ground GND, wherein the switch component 205 is coupled to the voltage detection unit 201 and operates according to the setting voltage Vc. The voltage regulator circuit 207 is coupled between the power pin VCC of the driver chip 30 and the ground GND, wherein the voltage regulator circuit 207 is used for stabilizing the operating voltage provided to the driver chip 30. When the voltage detection unit 201 detects that the voltage level at the power terminal PT is higher than a first predetermined value Vset, the voltage detection unit 201 conducts the switch component 205 to pull-down the voltage being received by the driver chip 30. Consequently, the driver chip 30 may stop operate as the received operating voltage drops and cut off the light emitting unit 40 forcing the current ILED drop to zero. Therefore the disclosed over voltage protection circuit 20 can turn off the driver chip 30 prior to the activation of the over temperature protection so as to achieve active protection.

In the instantly disclosed embodiment, the voltage detection unit 201 includes a resistor R1 (e.g., a first resistor) and a resistor R2 (e.g., a second resistor); the current limiting component 203 includes a resistor R3; the switch component 205 includes an NMOS transistor Q1; the voltage regulator circuit 207 includes a zener diode D5 and a capacitor C1. The series-connected resistors R1 and R2 are coupled between the power terminal PT and the ground GND to form a voltage divider circuit. The resistor R3 is coupled between the power terminal PT and the NMOS transistor Q1. The NMOS transistor Q1 is coupled to the power pin VCC of the driver chip 30 and the ground GND. The zener diode D5 and the capacitor C1 are parallel-connected between the power pin VCC of the driver chip 30 and the ground GND.

Specifically, a first end of the resistor R1 is coupled to the power terminal PT, while a second end of the resistor R1 is coupled to a first end of the resistor R2. A second end of the resistor R2 is coupled to the ground GND. A first end of the resistor R3 is coupled to the power terminal PT, while a second end of the resistor R3 is coupled to both the drain of the NMOS transistor Q1 and the power pin VCC of the driver chip 30. Thus, the current flow through the NMOS transistor Q1 can be configured by adjusting the resistance of the resistor R3. The source of the NMOS transistor Q1 is coupled to the ground GND. The gate of the NMOS transistor Q1 is coupled to the junction of the resistor R1 and the resistor R2. Or equivalently, the gate of the NMOS transistor Q1 is coupled to a common terminal formed by the resistor R1 and the resistor R2. The resistor R1 and the resistor R2 may generate the setting voltage Vc (i.e., voltage drop across the resistor R2) according to the voltage level at the power terminal PT and output to the gate of the NMOS transistor Q1 so as to control the operation of the NMOS transistor Q1.

Furthermore, the cathode of the zener diode D5 is coupled to both a first end of the capacitor C1 and the power pin VCC of the driver chip 30. The anode of the zener diode D5 is coupled to both a second end of the capacitor C1 and the ground GND. The zener diode D5 can stably operate in the breakdown voltage thereof in reverse-bias, thus can be used to stabilize the operating voltage received at the power pin VCC of the driver chip 30. The capacitor C 1 is for filtering the ripple voltage received at the power pin VCC of the driver chip 30. It is worth to note that in practice the type of zener diode D5 can be selected in accordance to the electrical characteristic requirement of the driver chip 30. For instance, choose a zener diode D5 having the reverse breakdown voltage that fulfills the electrical characteristics requirement of the driver chip 30. Hence the type of the zener diode D5 is not limited by the instant embodiment. Moreover, those skilled in the art should be able to select the appropriate zener diode D5 and capacitor C1 fulfilling the operation requirements of the driver circuit illustrated in FIG. 1, and further descriptions are therefore omitted.

Furthermore, the instant embodiment adopts the off-line linear LED chip IC as the driver chip 30, wherein the power pin VCC of the driver chip 30 either receives the operating voltage provided by the power terminal PT through resistor R3 or pull-down to the ground GND when the NMOS transistor Q1 conducts. A ground pin GND of the driver chip 30 is coupled to the ground GND. The driving current configuration component 33 in this instant embodiment is implemented by a resistor R4, but is not limited thereto. The resistor R4 is coupled between a driving current configuration component ISET and the ground GND, consequently, the current ILED flowing through a plurality of series-connected LEDs 401a~401n in the light emitting unit 40 may be configured by adjusting the resistance of the resistor R4 so as to control the operation of the LEDs 401a~401n.

The driving pin SW of the driver chip 30 is coupled to the cathode of the LED 401n. During the normal operation of the driver chip 30, the plurality of series-connected LEDs 401a~401n in the light emitting unit 40 may through the driving pin SW of the driver chip 30 connected to the ground GND to form a close loop. Conversely, an open loop is formed when the driver chip 30 stop operates thereby discontinues current ILED from flowing further cuts off the LEDs 401a~401n and disable the operation of the light emitting unit 40. In addition, the current flowing through the LEDs 401a~401n is represented by ILED as shown in FIG. 1 while the voltage across the plurality of series-connected LEDs 401a~401n is represented by VLED.

The main operation of the driver circuit 1 can be summarized as follow. When the voltage level at the power terminal PT is lower than the first predetermined value Vset, the junction of the resistor R1 and resistor R2 outputs the setting voltage Vc according to the voltage level at the power terminal PT to cut off the NMOS transistor Q1. At the moment, the power pin VCC of the driver chip 30 receives the operating voltage provided by the power terminal PT through the voltage regulator circuit 207 formed of parallel-connected zener diode D5 and capacitor C1 and configures the brightness associated with the plurality of series-connected LEDs 401a~401n. When the voltage level at the power terminal PT is higher than the predetermined value Vset, the junction of the resistor R1 and resistor R2 outputs the setting voltage Vc to conduct the NMOS transistor Q1 so as to pull-down the power pin VCC of the driver chip 30 to ground GND thereby disable the driver chip 30. At this moment, no conducting loop exits between the plurality of series-connected LEDs 401a~401n thereby discontinue the current ILED from flowing and turn off the light emitting unit 40. Consequently, the over voltage protection circuit 20 may active protect the driver chip 30 from over voltage damage prior to the activation of the over temperature protection (OTP) mechanism.

It is worth to note that the first predetermined value Vset is related to the resistance of the resistor R1, the resistance of the resistor R2, and the threshold voltage Vth of the NMOS transistor Q1 by the following equation:

$$Vset = \frac{(1 + \frac{R_1}{R_2}) \times Vth}{\sqrt{2}}$$

wherein, *Vset* represents the first predetermined value. *Vth* represents the threshold voltage Vth of the switch component 205, wherein in the instant embodiment is the threshold voltage of the NMOS transistor Q1. $R_1$ represents the resistance of the resistor R1 and $R_2$ represents the resistance of the resistor R2. Consequently, the circuitry of the voltage detection unit 201 can be designed by first designated the first predetermined value Vset in accordance to the design requirement, and then computed the resistances $R_1$, $R_2$ of the resistors R1 and R2 respectively using the above described formula.

Taking the voltage level at the power terminal PT to be 110V as an example, an upper voltage limit value can be used as the first predetermined value Vset, e.g., 148VAC. The threshold voltage Vth of the NMOS transistor Q1 may be obtained from the datasheet of the selected NMOS transistor Q1. Plugging the first predetermined value Vset and the threshold voltage Vth into the above equation, the resistance ratio between the resistor R1 and R2 can be obtained. Next, select a resistance value for one of the resistors R1 and R2, (e.g., select the resistance $R_1$ for the resistor R1), and then obtain the resistance for the other according to the resistance ratio (e.g., calculate the resistance $R_2$ for the resistor R2 according to the obtained resistance ratio). Hence based on FIG. 1 and the above elaborations, those skilled in the art should be able to derive the above equation and infer the application of the equation, thus further descriptions are therefore omitted.

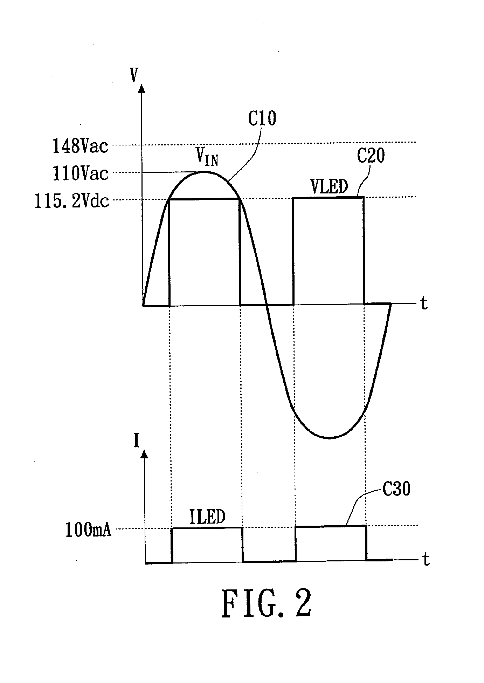

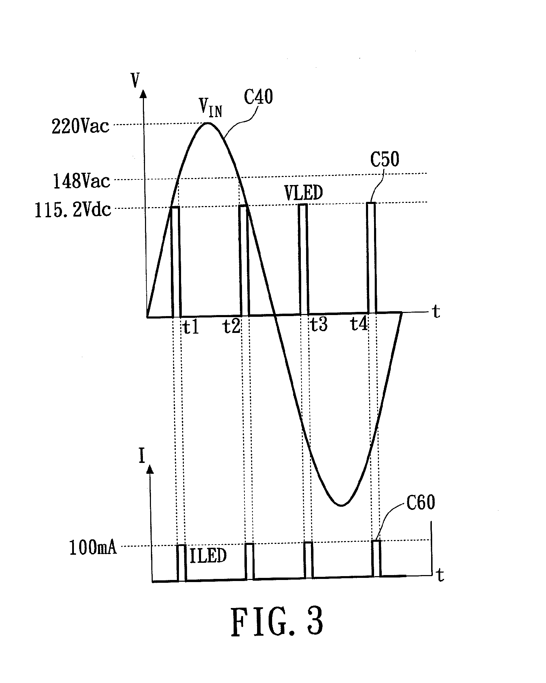

Next, please refer to FIG. 2 and FIG. 3, which respectively shows the waveforms illustrating the circuit operation associated with the driver circuit in accordance to the first exemplary embodiment. Curves C10 and C40 represent the voltage waveform associated with the AC voltage $V_{IN}$ generated by the AC voltage source 101. Curves C20 and C50 represent the voltage waveform of the voltage VLED across the plurality of series- connected LEDs 401a~401n. Curves C30 and C60 represent the current waveform of the current ILED flowing through the plurality of series- connected LEDs 401a~401n.

The circuit operation waveform shown in FIG. 2 and FIG. 3 are generated in response to the first predetermined value Vset being 148 VAC and the threshold voltage Vth of the NMOS transistor Q1 being 5 VDC. Further, through using the above equation, the corresponding resistance $R_1$ of the resistor R1 is calculated to be 2 MΩ and the resistance $R_2$ of the resistor R2 is calculated to be 49 kΩ. In addition, the resistance of the resistor R3 is 1 MΩ. As illustrates by curves C20 and C50, the voltage VLED across the plurality of the LEDs 401a~401n is set to be 115.2 VDC. Moreover, as depicted by curves C30 and C60, the current ILED flowing through the plurality of LEDs 401a~401n is configured to be 100 mA, wherein the current ILED may be set by selecting an appropriate resistance $R_4$ for the resistor R4.

As illustrated by the curve C10 of FIG. 2, when the AC voltage source 101 generates an AC voltage $V_{IN}$ of 110 VAC, or equivalently the voltage level at the power terminal PT is lower the first predetermined value Vset. The setting voltage Vc outputted by the voltage detection unit 201 is lower than the threshold voltage Vth of the NMOS transistor Q1 thereby turns off the NMOS transistor Q1. Consequently, the power terminal PT provides the operating voltage to the driver chip 30 so as to turn on the LEDs 401a~401n

Conversely, as illustrated by the curve C40. when the AC voltage $V_{IN}$ generated by the AC voltage source 101 increase to 220 VAC, then the voltage level at the power terminal PT becomes higher than the first predetermined value Vset (referring to time point t1- t2 and time point t3- t4) . Consequently, the setting voltage Vc outputted by the voltage detection unit 201 becomes higher than the threshold voltage Vth of the NMOS transistor Q1, thereby conducts the NMOS transistor Q2 and pull- down the operating voltage being received by the drive chip 30 so as to disable the operation of the driver chip 30. As the result, the current ILED is unable to flow and the LEDs 401a~401n are turned off which in turns disable the light emitting unit 40 to prevent overheating occurrence caused by over voltage damage thereby achieve the driver chip 30 protection.

It is noteworthy that the switch component 205 can be implemented using an NPN transistor as well. In particular, the collector of the NPN transistor may be coupled to both the power pin VCC of the driver chip 30 and the second end of the resistor R3. The emitter of the NPN transistor may be coupled to the ground GND. The base of the NPN transistor may be coupled to the junction of the resistor R1 and R2, for receiving the setting voltage Vc. The basic operation of the NPN transistor is similar to the NMOS transistor Q1, hence base on the above explanations, those skilled in the art should be able to infer the implementation and the operation associated with the NPN transistor, further descriptions are therefore omitted. Moreover, the circuitry associated with the plurality of LEDs 401a~401n in the light emitting unit 40 may be implemented using parallel or parallel-series connections and is not limited to the example provided herein.

It should be noted that FIG. 1 only serve as an illustration for describing the driver circuit in accordance to the first exemplary embodiment and the present disclosure is not limited thereto. Similarly, FIG. 2 and FIG. 3 only describe exemplary circuit operation associated with the driver circuit and the present disclosure is not limited thereto. Moreover, the exact type, actual circuitry structure, implementation method and/or connection method associated with the power supply circuit 10, the voltage detection unit 201, the current limiting component 203, the switch component 205, and the voltage regulator circuit 27 depends on specific design and/or operational requirement and shall not be limited to the examples provided by the instant embodiment.

[Second exemplary embodiment]

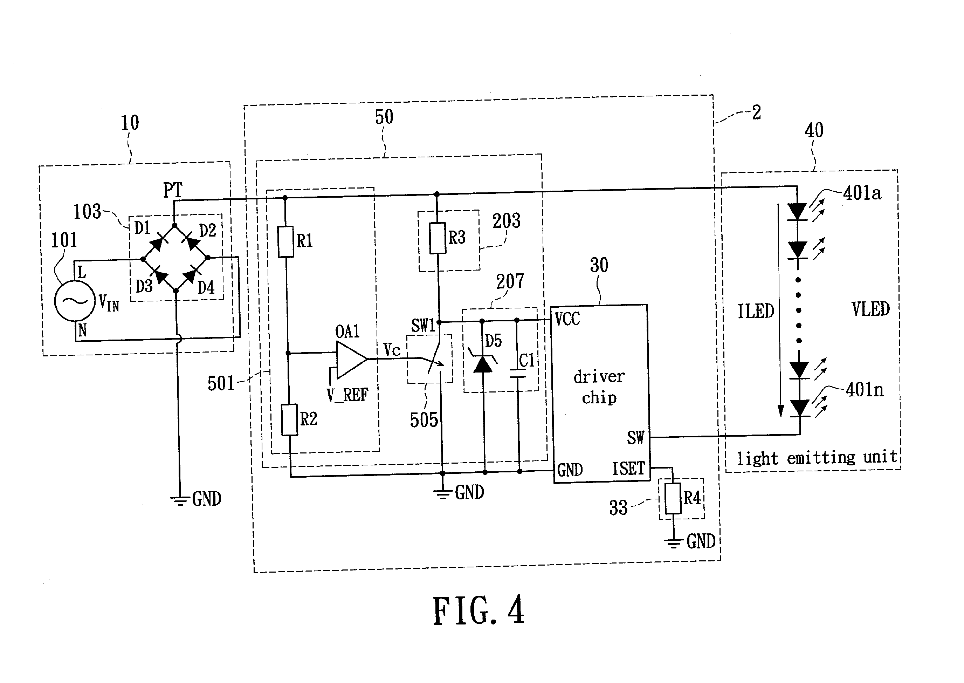

The voltage detection unit 201 and the switch component 205 described in the first exemplary embodiment may have different implementation. Please refer to FIG. 4, which illustrates a circuit diagram associated with the driver circuit in accordance to the second exemplary embodiment of the present disclosure. The driver circuit 2 is coupled to the power supply circuit 10 wherein the driver circuit 2 includes an over voltage protection circuit 50 and a driver chip 30. The over voltage protection circuit 50 is coupled to the driver chip 30 to protect the driver chip 30 from suddenly high voltage drop (e.g., voltage spike) as describe previously. The light emitting unit 40 is coupled between the power terminal PT and the driving pin SW of the driver chip 30, wherein the driver chip 30 may as aforementioned configures the current flowing through the light emitting unit 40. The over voltage protection circuit 50 includes a voltage detection unit 501, the current limiting component 203, the switch component 505, and the voltage regulator circuit 207. The driver chip 30 may as described previously be an off line linear LED driver IC. Furthermore, the circuit structure associated with the driver circuit 2 is essentially the same as the aforementioned driver circuit 1, further descriptions are therefore omitted.

The difference between FIG. 4 and FIG. 1 is in the circuit structure of the over voltage protection circuit 50 associated with the driver circuit 2. In the instant embodiment, the voltage detection unit 501 of the over voltage protection circuit 50 further includes a comparator OA1; the switch component 505 of the over voltage protection circuit 50 includes a switch SW1. The comparator OA1 may be implemented by an operational amplifier, however the actual type of the comparator OA1 is not limited to the example provided by the present disclosure. The switch SW1 includes a first end, a second end, and a control end, but the actual structure for the switch SW1 is not limited thereto.

Specifically, the first input terminal (e.g., the non- inverting terminal) of the comparator OA1 is coupled to the junction of the resistor R1 and the resistor R2 (or equivalently the common terminal formed by the resistor R1 and R2) and the second input terminal (e.g., the inverting terminal) of the comparator OA1 is coupled to the reference voltage V_ REF. The output terminal of the comparator OA1 is coupled to the control end of the switch SW1. The first end of the switch SW1 is coupled to both the power pin VCC of the driver chip 30 and a second end of the current limiting resistor R3. The second end of the switch SW1 is coupled to the ground GND. The comparator OA1 of the voltage detection unit 501 may output a setting voltage Vc to control the operation of the switch SW1 according to the comparison result between the cross voltage of resistor R2 and the reference voltage V_ REF.

Furthermore, when the voltage level at the power terminal PT is lower than a first predetermined value Vset, the cross voltage of the resistor R2 becomes lower than the reference voltage V_ REF, the comparator OA1 outputs a setting voltage Vc cutting off the switch SW1 so as to have the power pin VCC of the driver chip 30 receiving the operating voltage provided by the power terminal PT. When the voltage level at the power terminal PT is higher than the first predetermined value Vset, the cross voltage of the resistor R2 becomes higher than the reference voltage V_ REF, the comparator OA1 outputs the setting voltage Vc conducts the switch SW1 so as to pull- down the power pin VCC of the driver chip 30. Consequently, the driver chip 30 disable thereby shut down the light emitting unit 40 forcing the current ILED drop to zero and turning off the LEDs 401a~401n.

It is worth to note that the reference voltage V_ REF may for example be determined in accordance to the first predetermined value Vset and the resistance of the resistors R1, R2 or the threshold voltage Vth of the switch SW1, however the present disclosure is not limited herein. The rest circuitry of the over voltage protection circuit 50 is essential the same as the over voltage protection circuit 20 and based on the above elaborations, those skilled in the art should be able to infer the operation associated with the over voltage protection circuit 50, hence further descriptions are therefore omitted. FIG. 4 is only an illustration diagram provided in accordance to the instant embodiment of the present disclosure, and the present disclosure is not limited thereto. Similarly, the exact type, structure, implementation method, and/or connection method associated with the power supply circuit 10, the voltage detection unit 501, the current limiting resistor 203, the comparator OA1, the switch component 505, the voltage regulator circuit 207, the driver chip 30, and the light emitting unit 40 may depend upon the specific design and/or operational requirement and shall not be limited to the examples provided by the instant embodiment.

[Third exemplary embodiment]

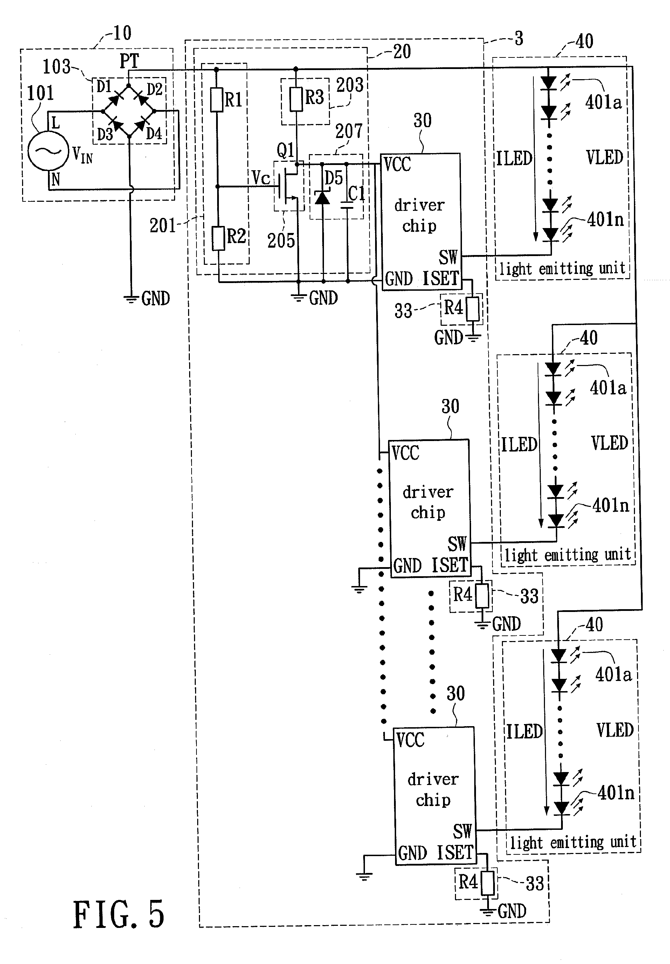

The aforementioned driver circuit 1 of the first exemplary embodiment may be utilized to drive a plurality of the light emitting units 40. Please refer to Fig. 5 in conjunction with FIG. 1, wherein FIG. 5 illustrates a circuit diagram associated with the driver circuit in accordance to the third exemplary embodiment of the present disclosure.

The difference between FIG. 5 and FIG. 1 is in that the driver circuit 3 being coupled between the power terminal PT of the power supply circuit 10 and the plurality of light emitting units 40, for receiving the voltage provided by the power supply circuit 10 and configuring the current ILED flowing through the LEDs 401a~401n of the light emitting units 40 respectively so as to adjust the brightness of the plurality of LEDs 401a~401n. The anodes associated with the plurality of the LEDs 401 a is respectively coupled to the power terminal PT and the cathode of the plurality of LEDs 401n is respectively coupled to the driving pin SW of the driver chips 30.

The driver circuit 3 includes the over voltage protection circuit 20 and a plurality of the driver chip 30. The over voltage protection circuit 20 is coupled to the plurality of the driver chips 30 for performing over voltage protection simultaneously to all the driver chips 30. Specifically, the power pin VCC of each driver chip 30 is coupled to both the drain of the NMOS transistor Q1 and the second end of the resistor R3 associated with the over voltage protection circuit 20. The power pin VCC of each driver chip 30 is further coupled to the parallel-connected voltage regulator circuit 207 formed by the zener diode D5 and the capacitor C1. The ground pin GND of each driver chip 30 is respectively coupled to the ground GND.

In addition, the driving current configuration component ISET of each driver chip is coupled to the resistor R4, and through adjusts the resistance of each resistor R4, the current ILED flowing through the LEDs 401a~401n of each light emitting unit 40 coupling to each driver chip 30 may be respectively configured thereby adjusting the brightness associated with the LEDs 401a~401n. It is worth to note that the resistors R4 coupling to the driving current configuration component ISET of the driver chip 30 is configured in according to the design needs, hence may be of same or different resistance and shall not be limited by the instant embodiment. The driving pin SW of each driver chip 30 is respectively coupled to the cathode of the LEDs 401n associated with each light emitting unit 40 so as to control the individual operation of the LEDs 401a~401n associated with each light emitting unit 40.

The circuit operation may be summarized as follow, the voltage detection unit 201 may output a setting voltage Vc and conduct the NMOS transistor Q1 to pull-down the operating voltage received by the driver chips 30 when detects the voltage level at the power terminal PT being higher than the first predetermined value Vset. At the moment, the driver chips 30 may be turned off as the received operating voltage being pull-down, consequently forcing the current ILED drop to zero thereby shut down the light emitting units 40. Henceforth, the over voltage protection circuit 20 may shut down the driver chips 30 prior to the activation of the over temperature protection thereby achieve active chip protection.

It is worth to note that FIG. 5 is a special implementation of FIG. 1 and the operation of the over voltage protection 20 is essential the same as the aforementioned embodiments. Based on the above elaborations, those skilled in the art should be able to infer the operation associated the over voltage protection circuit 20 and the plurality of driver chips 30, thus further descriptions are therefore omitted. In addition the driver circuit 3 illustrated in FIG. 5 for controlling the plurality of light emitting units 40 may be apply in large light emitting system such as backlight, LCD display or LED display and is not be limited by the examples provided herein.

Furthermore, the switch component 205 may as the aforementioned implemented by the NPN transistor. For instance, the collector of the NPN transistor may be coupled to both the power pin VCC of the driver chips 30 and the second end of the resistor R3, the emitter of the NPN transistor may be coupled to ground GND, and the base of the NPN transistor may be coupled to the junction of the resistors R1, R2 to receive the setting voltage Vc. The operation of NPN transistor is similar to the NMOS transistor, thus based on the above explanations, those skilled in the art should be able to infer the actual implementation of using the NPN transistor to drive multiple driver chips 30 and further descriptions are therefore omitted. Moreover, the voltage detection unit 201 may be as described in the second exemplary embodiment implemented using the resistors R1, R2 and the comparator OA1 and the switch component 205 as described in the second exemplary embodiment implemented using the switch SW1. Those skilled in the art should be able to infer other implementations for the voltage detection unit 201 and the switch unit 205, further descriptions are therefore omitted. The circuitry structure and the implementation associated with the over voltage protection circuit 20 as well as the connection method of the plurality driver chips 30 illustrated in FIG. 5 only serves as an example and the present disclosure is not limited thereto.

In summary, the over voltage protection circuit provided by the exemplary embodiment of the present disclosure can be coupled between a power terminal and a power pin of the driver chip which is used for driving a light emitting unit. The over voltage protection circuit can utilize voltage determining method and actively conducts switch component to cut off the voltage being received by a driver chip when the voltage level of the supplying power is higher than a predetermined value so as to achieve active chip protection and prevent overheating issue result in over voltage occurrence.

The over voltage protection circuit illustrated by exemplary embodiment of the present disclosure may couple to multiple driver chips so as to protect multiple drive chips. The aforementioned first predetermined value may be set in accordance to the design needs and further can be used to design the corresponding voltage detection circuit through the provided formula thereby increase the practical value of the over voltage protection circuit. The over voltage circuit further includes a voltage regulator circuit for stabilizing the operating voltage provided to the driver chip and can through utilizing the external connection method simplifying the internal circuitry design associated with the driver chip.

In addition, the over voltage protection circuit illustrated by the exemplary embodiment of the present disclosure may further reduce power consumption during the normal operation of the driver chip. The over voltage protection circuit may actively protects the driver chip prior to the activation of the over temperature protection function. Therefore, the disclosed over voltage protection can be applied to all types chips regardless whether the driver chips having the over temperature protection capability or not, thereby achieve the over voltage/over temperature protection objective.

The above-mentioned descriptions represent merely the exemplary embodiment of the present disclosure, without any intention to limit the scope of the present disclosure thereto. Various equivalent changes, alternations or modifications based on the claims of present disclosure are all consequently viewed as being embraced by the scope of the present disclosure.

**Claims**

1. An over voltage protection circuit (20), adapted for placing between a power pin (VCC) of a chip (30) and a power terminal (PT), **characterized in that** the over voltage protection circuit (20) comprises:

   a voltage detection unit (201), coupled between the power
   terminal (PT) and a ground (GND), for outputting a setting voltage (Vc) according to a voltage level at the power terminal (PT);
   a current limiting component (203), coupled between the power
   terminal (PT) and the power pin (VCC) of the chip (30); and
   a switch component (205), coupled between the power pin (VCC) of the chip (30) and the ground (GND), wherein the switch component (205) is further coupled to the voltage detection unit (201) and operates according to the setting voltage (Vc);

   wherein the switch component (205) conducts to cut off voltage being received by the chip (30), when the voltage level at the power terminal (PT) is higher than a first predetermined value.

2. The over voltage protection circuit (20) according to claim 1, **characterized in that** the voltage detection unit (201) comprises:

   a first resistor (R1), coupled between the power terminal (PT) and
   a common terminal; and
   a second resistor (R2), coupled between the common terminal
   and the ground (GND);

   wherein the setting voltage (Vc) is generated at the common terminal.

3. The over voltage protection circuit (20) according to claim 2, **characterized in that** the voltage detection unit (201) further comprises a comparator (OA1), having a first input terminal, a second input terminal, and an output terminal, wherein the first input terminal is coupled to the common terminal, the second input terminal is coupled to a reference voltage (V_REF), and the output terminal is for outputting the setting voltage (Vc) to the switch component (205).

4. The over voltage protection circuit (20) according to claim 1, **characterized in that** the current limiting component (203) is a resistor (R3).

5. The over voltage protection circuit (20) according to claim 1, **characterized in that** the switch component (205) is an NMOS transistor (Q1), the drain of the NMOS transistor (Q1) being coupled to the power pin (VCC), the source of the NMOS transistor (Q1) being coupled to the ground (GND), the gate of the NMOS transistor (Q1) being coupled to the voltage detection unit (201) for receiving the setting voltage (Vc).

6. The over voltage protection circuit (20) according to claim 1, **characterized in that** the switch component (205) is an NPN transistor, the collector of the NPN transistor being coupled to the power pin (VCC), the emitter of the NPN transistor being coupled to the ground (GND), the base of the NPN transistor being coupled to the voltage detection unit (201) for receiving the setting voltage (Vc).

7. The over voltage protection circuit 20 according to claim 1, **characterized by** further comprising:

    a zener diode (D5) having an anode coupled to the ground
    (GND), and a cathode coupled to the power pin (VCC) of the chip (30); and
    a capacitor (C1), coupled between the power pin (VCC) of the
    chip (30) and the ground (GND).

8. The over voltage protection circuit (20) according to claim 1, **characterized in that** the chip (30) is an off-line linear LED driver IC.

9. The over voltage protection circuit (20) according to claim 2, **characterized in that** the power terminal (PT) is further coupled to a rectifier circuit (103), the rectifier circuit (103) rectifying an AC voltage ($V_{IN}$) and powering the chip (30) through the power terminal (PT), wherein when the AC voltage ($V_{IN}$) is higher than the first predetermined value, the switch component (205) conducts, wherein the first predetermined value is related to the resistance of the first resistor (R1), the resistance of the second resistor (R2), and a threshold voltage of the switch component (205) by the following equation:

$$Vset = \frac{(1+\frac{R1}{R2}) \times Vth}{\sqrt{2}}$$

wherein, *Vset* represents the first predetermined value; *R*1 represents the resistance of the first resistor (R1); *R*2 represents the resistance of the second resistor (R2); *Vth* represents the threshold voltage of the switch component (205).

10. A driver circuit (1), adapted for driving a light emitting unit (40) having at least a light emitting diode (401a), a first end of the light emitting unit (40) being coupled to a power terminal (PT), **characterized in that** the driver circuit (1) comprises:

    a chip (30), coupled to a second end of the light emitting unit (40), for driving the light emitting unit (40); and
    an over voltage protection circuit (20), coupled between the
    power terminal (PT) and a power pin (VCC) of the chip (30), the over voltage protection circuit (20) comprising:

       a voltage detection unit (201), coupled between the power
       terminal (PT) and a ground (GND), for outputting a setting voltage (Vc) according to a voltage level at the power terminal (PT);
       a current limiting component (203), coupled between the
       power terminal (PT) and the power pin (VCC) of the chip (30); and
       a switch component (205), coupled between the power pin (VCC) of the chip (30) and the ground (GND), wherein the switch component (205) is further coupled to the voltage detection unit (201) and operates according to the setting voltage (Vc);

    wherein the switch component (205) conducts to cut off voltage being received by the chip (30), when the voltage level at the power terminal (PT) is higher than a first predetermined value.

11. The driver circuit (1) according to claim 10, **characterized in that** the voltage detection unit (201) comprises:

    a first resistor (R1), coupled between the power terminal (PT) and a common terminal; and
    a second resistor (R2), coupled between the common terminal and the ground (GND);

    wherein the setting voltage (Vc) is generated at the common terminal.

12. The driver circuit (1) according to claim 11, **characterized in that** the voltage detection unit (201) further comprises a comparator (OA1), having a first input terminal, a second input terminal, and an output terminal, wherein the first input terminal is coupled to the common terminal, the second input terminal is coupled to a reference voltage (V_REF), and the output terminal is for outputting the setting voltage (Vc) to the switch component (205).

**13.** The driver circuit (1) according to claim 10, **characterized in that** the current limiting component (203) is a resistor (R3).

**14.** The driver circuit (1) according to claim 10, **characterized by** further comprising:

a rectifier circuit (103), coupled to the power terminal (PT), for rectifying an AC voltage ($V_{IN}$) and powering the chip (30) through the power terminal (PT), wherein when the AC voltage ($V_{IN}$) is higher than the first predetermined value, the switch component (205) conducts, wherein the first predetermined value is related to the resistance of the first resistor (R1), the resistance of the second resistor (R2), and a threshold voltage of the switch component (205) by the following equation:

$$Vset = \frac{(1 + \frac{R1}{R2}) \times Vth}{\sqrt{2}}$$

wherein, *Vset* represents the first predetermined value; *R*1 represents the resistance of the first resistor (R1); *R*2 represents the resistance of the second resistor (R2) ; *Vth* represents the threshold voltage of the switch component (205).

FIG. 1

EP 2 639 915 A2

FIG. 2

FIG. 3

FIG. 4

FIG. 5